# EUROPÄISCHE PATENTANMELDUNG

(11) **EP 0 732 095 A2**
(43) Veröffentlichungstag der Anmeldung: **18.09.1996**
(21) Anmeldenummer: 95119112.1
(22) Anmeldetag: 05.12.1995
(51) Int. Cl.: A61G 3/00

(54) **Kranken- oder Rettungswagen**

(30) Priorität: 17.02.1995 DE 29502668 U
(71) Anmelder: Christian Miesen Fahrzeug- und Karosseriewerk GmbH, D-53129 Bonn (DE)
(72) Erfinder: Holling, Gerd, Dr.-Ing., D-53129 Bonn (DE)
(74) Vertreter: Brose, D. Karl, Dipl.-Ing.

(57) **Zusammenfassung**

Die Erfindung betrifft einen Krankenwagen mit einem Krankentransportraum, in welchem eine Krankentrage angeordnet ist, wobei medizinische Geräte und Einrichtungen im Bereich der durch das Dach das Fahrzeugs gebildeten Decke des Krankentransportraumes angeordnet sind. Im Dach (3) des Fahrzeugs (1) ist im Bereich oberhalb der Krankentrage ein Ausschnitt (4) vorgesehen. Der Ausschnitt (4) ist durch einen erhöhten Dachaufsatz (5) überdeckt, welcher bevorzugt durch ein Rollo od. dgl. verschließbar ist. An den den Dachaufsatz (5) bildenden Wandungen sind Aufhängeeinrichtungen und Lagerungen für medizinische Geräte befestigt.

## Beschreibung

Die Erfindung betrifft einen Kranken- oder Rettungswagen mit einem Krankentransportraum, in welchem eine Krankentrage angeordnet ist, wobei medizinische Geräte und Einrichtungen im Bereich der durch das Dach des Fahrzeugs gebildeten Decke des Krankentransportraums angeordnet sind.

Im Rahmen der allgemeinen Entwicklung hat die Anzahl und Dimensionierung von medizinischen Geräten und Einrichtungen, welche in derartigen Fahrzeugen mitgeführt werden, ständig zugenommen. Hierdurch bestand aufgrund des bei derartigen Fahrzeugen beschränkten Raumangebots die Notwendigkeit, derartige Geräte und Einrichtungen teilweise von dem Patienten entfernt zu montieren und teilweise an der Fahrzeugdecke aufzuhängen. Hierdurch wird jedoch die Bewegungsfreiheit in dem Krankentransportraum erheblich eingeschränkt und darüber hinaus insbesondere die zur Verfügung stehende Höhe des Innenraums verkleinert.

Der Erfindung liegt die Aufgabe zugrunde, diese Nachteile zu vermeiden.

Bei einem Kranken- oder Rettungswagen der oben genannten Art wird diese Aufgabe im wesentlichen dadurch gelöst, daß im Dach des Fahrzeugs im Bereich oberhalb der Krankentrage ein Ausschnitt vorgesehen ist, und daß der Ausschnitt durch einen erhöhten Dachaufsatz überdeckt ist.

Hierdurch wird praktisch eine partielle Dacherhöhung in der Fahrzeugdecke unmittelbar über dem Patienten erreicht, welche zur Unterbringung der notwendigen medizinischen Geräte und Einrichtungen dient. Die Innenhöhe des Fahrzeugs wird dabei durch die Einbauten und Geräte in keiner Weise eingeschränkt, sondern steht dem Betreuer des Patienten voll zur Verfügung.

Im einzelnen kann die Erfindung dadurch weitergebildet werden, daß der Ausschnitt durch ein Rollo od. dgl. verschließbar ist, welches bei einer bevorzugten Ausführungsform elektrisch betätigt werden kann. Hierdurch wird erreicht, daß bei Nichtbenutzung der medizinischen Geräte und Einrichtungen das Rollo im geschlossenen Zustand mit der Fahrzeugdecke annähernd eine ebene Fläche bildet, und die medizinischen Geräte und Einbauten darüber hinaus gegen Staub geschützt sind.

Bei einer besonders bevorzugten Ausführungsform nach der Erfindung sind an den den Dachaufsatz bildenden Wandungen Aufhängeeinrichtungen und Lagerungen für die medizinischen Geräte vorgesehen.

Der Dachaufsatz ist bevorzugt fest mit dem Dach des Fahrzeuges verbunden.

Im einzelnen kann die Erfindung dadurch weitergebildet werden, daß der Dachaufsatz einen Dachlüfter aufweist. Bei einer bevorzugten Weiterbildung dieser Ausführungsform ist der Dachlüfter mit einer Filteranlage für die in das Fahrzeug geleiteten Luft versehen. Dies ist erfindungsgemäß möglich, da durch den Dachaufsatz zusätzlich Bauraum für eine derartige Filteranlage geschaffen wurde.

Im einzelnen ist es hierbei vorteilhaft, den Dachlüfter möglichst weit hinten und zum oberen Dachniveau abgesenkt anzuordnen. Hierdurch wird die Geräuschbildung und der Wassereintritt durch den Fahrtwind vermieden.

Dies kann bei einer bevorzugten Ausführungsform nach der Erfindung dadurch erreicht werden, daß der Dachaufsatz im hinteren Bereich einen stufenförmig niedrigeren Absatz aufweist, und daß der Dachlüfter auf dem Absatz montiert ist.

Im einzelnen ist es ferner vorteilhaft, daß der Dachaufsatz mit Montageflächen für Rundumkennleuchten und weitere Beleuchtungseinrichtungen versehen ist.

Bevorzugt besteht der Dachaufsatz aus glasfaserverstärktem Kunststoff oder aus Metall.

Im folgenden wird die Erfindung anhand einer in den Zeichnungen beispielhaft veranschaulichten Ausführungsform näher erläutert. Es zeigt:
**Figur 1** eine skizzenhafte schematische Ansicht des Dachbereiches des Kranken- oder Rettungswagens vom Heck her gesehen und
**Figur 2** eine Seitenansicht von Figur 1.

In den Zeichnungen ist lediglich skizzenhaft der Dachbereich eines Kranken- oder Rettungswagens 1 gezeigt, welcher nach oben einen Krankentransportraum abschließt, in welchem eine nicht dargestellte Krankentrage angeordnet ist.

Erfindungsgemäß ist in dem Dach 3 des Fahrzeuges 1 im Bereich oberhalb der nicht dargestellten Krankentrage ein rechteckiger Ausschnitt 4 vorgesehen. Der Ausschnitt 4 ist durch einen erhöhten Dachaufsatz 5 überdeckt, welcher mit dem Dach 3 fest verbunden ist.

Im Innenraum ist der Ausschnitt 4 durch ein nicht dargestelltes Rollo od. dgl. verschließbar, welches elektrisch angetrieben sein kann.

An den den Dachaufsatz 5 bildenden Wandungen sind nicht dargestellte Aufhängeeinrichtungen und Lagerungen für die unterzubringenden medizinischen Geräte und Einrichtungen befestigt.

Der Dachaufsatz 5 ist zusätzlich mit einem Dachlüfter 6 versehen, welcher mit einer Filteranlage für die in das Fahrzeug 1 geleitete Luft versehen sein kann.

Um den Dachlüfter 6 zur Vermeidung der Geräuschbildung und von Wassereintritt durch den Fahrtwind möglichst weit hinten und zum oberen Niveau des Daches 3 hin abgesenkt anzuordnen, ist der Dachaufsatz 5 in seinem hinteren Bereich mit einem stufenförmig nach unten abgesetzten Absatz 9 versehen, wobei der Dachlüfter 6 auf dem Absatz 9 montiert ist.

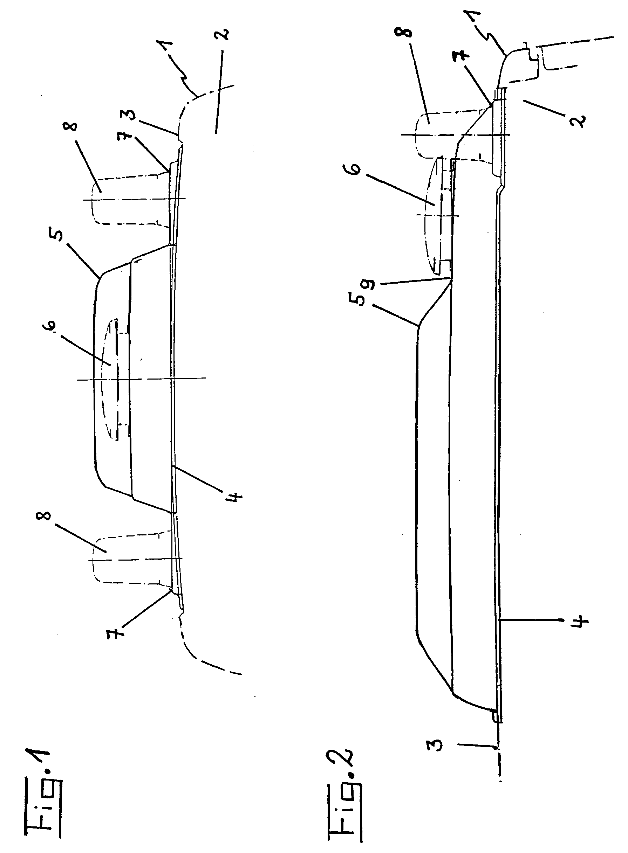

Wie in den Figuren 1 und 2 veranschaulicht, ist der Dachaufsatz 5 ferner mit ebenen Montageflächen 7 zur Halterung von Rundumkennleuchten 8 oder anderen weiteren Beleuchtungseinrichtungen versehen.

Der Dachaufsatz 5 kann entweder aus glasfaserverstärktem Kunststoff oder aus Metall bestehen.

Da sich der Ausschnitt 4 in dem Dach 3 des Fahrzeugs unmittelbar oberhalb eines auf der Krankentrage liegenden Patienten befindet, sind auch die medizinischen Geräte und Einrichtungen in größtmöglicher Nähe zum Patienten, ohne hierbei die Innenhöhe des Krankentransportraums 2 einzuschränken.

Sämtliche aus der Beschreibung, den Ansprüchen und Zeichnungen hervorgehenden Merkmale und Vorteile der Erfindung, einschließlich konstruktiver Einzelheiten und räumlicher Anordnungen, können sowohl für sich als auch in beliebiger Kombination erfindungswesentlich sein.

## Patentansprüche

1. Kranken- oder Rettungswagen mit einem Krankentransportraum, in welchem eine Krankentrage angeordnet ist, wobei medizinische Geräte und Einrichtungen im Bereich der durch das Dach des Fahrzeugs gebildeten Decke des Krankentransportraums angeordnet sind, **dadurch gekennzeichnet**, daß im Dach (3) des Fahrzeugs (1) im Bereich oberhalb der Krankentrage ein Ausschnitt (4) vorgesehen ist, und daß der Ausschnitt (4) durch einen erhöhten Dachaufsatz (5) überdeckt ist.

2. Kranken- oder Rettungswagen nach Anspruch 1, dadurch gekennzeichnet, daß der Ausschnitt (4) durch ein Rollo od. dgl. verschließbar ist.

3. Kranken- oder Rettungswagen nach Anspruch 2, dadurch gekennzeichnet, daß das Rollo elektrisch angetrieben ist.

4. Kranken- oder Rettungswagen nach einem der vorstehenden Ansprüche, dadurch gekennzeichnet, daß an den den Dachaufsatz (5) bildenden Wandungen Aufhängeeinrichtungen und Lagerungen für medizinische Geräte befestigt sind.

5. Kranken- oder Rettungswagen nach einem der vorstehenden Ansprüche, dadurch gekennzeichnet, daß der Dachaufsatz (5) mit dem Dach (3) fest verbunden ist.

6. Kranken- oder Rettungswagen nach einem der vorstehenden Ansprüche, dadurch gekennzeichnet, daß der Dachaufsatz (5) einen Dachlüfter (6) aufweist, und daß der Dachlüfter (6) mit einer Filteranlage für die in das Fahrzeug (1) geleitete Luft versehen ist.

7. Kranken- oder Rettungswagen nach Anspruch 5 oder 6, dadurch gekennzeichnet, daß der Dachlüfter (6) möglichst weit hinten und zum oberen Dachniveau abgesenkt angeordnet ist, daß der Dachaufsatz (5) im hinteren Bereich einen stufenförmig niedrigeren Absatz (9) aufweist, und daß der Dachlüfter (6) auf dem Absatz (9) montiert ist.

8. Kranken- oder Rettungswagen nach einem der vorstehenden Ansprüche, dadurch gekennzeichnet, daß der Dachaufsatz (5) ebene Montageflächen (7) für Rundumkennleuchten (8) und weitere Beleuchtungseinrichtungen aufweist.

9. Kranken- oder Rettungswagen nach einem der vorstehenden Ansprüche, dadurch gekennzeichnet, daß der Dachaufsatz (5) aus glasfaserverstärktem Kunststoff besteht.

10. Kranken- oder Rettungswagen nach einem der Ansprüche 1 bis 8, dadurch gekennzeichnet, daß der Dachaufsatz (5) aus Metall besteht.
